# EUROPEAN PATENT APPLICATION

(11) **EP 4 678 967 A1**
(43) Date of publication of application: **14.01.2026**
(21) Application number: 24187366.0
(22) Date of filing: 09.07.2024
(51) Int. Cl.: F17C 5/02, F17C 7/00, F17C 5/00

(54) **UNLOADING AND LOADING CRYOGENIC LIQUIDS**

(71) Applicant: Tree Energy Solutions B.V., 1118 BG Schiphol (NL)
(72) Inventor: VAN POECKE, Paulus Q.J., 2930 Brasschaat (BE)
(74) Representative: Ipsilon Belgium

(57) **Abstract**

Example embodiments relate to a method and a system for unloading (201) a stored cryogenic liquid (213) from a storage tank (211) and loading (204) the storage tank with a substitute cryogenic liquid (214); wherein one of the cryogenic liquids, a first cryogenic liquid, has a lower storage pressure and a lower storage temperature relative to the other cryogenic liquid, a second cryogenic liquid; wherein the first cryogenic liquid is obtainable from the second cryogenic liquid by one or more conversion steps, and the second cryogenic liquid is obtainable from the first cryogenic liquid by one or more conversion steps.

## Description

### Field of the Invention

The present invention generally relates to transporting cryogenic liquids in storage tanks. In particular, the invention relates to unloading a first cryogenic liquid from a storage tank and loading the storage tank with a second cryogenic liquid.

### Background of the Invention

Renewable energy is typically abundantly available in geographical areas with a relatively low local energy demand, e.g. solar energy in the solar belt region; hydropower in Canada; and wind energy in Chile and Australia. Contrary, the availability of renewable energy is typically limited in geographical areas with a high local energy demand, e.g. Western Europe. Thus, there is a geographical mismatch between renewable energy availability and energy demand by consumers.

To address this, renewable energy can be converted to an energy storage medium or energy carrier at geographical locations where renewable energy is abundant, i.e. an energy-harvesting location. For example, green hydrogen can be produced through electrolysis powered by renewable energy at an energy-harvesting location. A transportable energy storage medium such as synthetic natural gas, SNG, can then be generated from the green hydrogen, e.g. through addition of carbon dioxide in a Sabatier process. The energy storage medium can be transported to energy-demanding locations, e.g. by ship or railway, where it is converted back to energy, e.g. by combusting the SNG.

It can be desirable to capture the waste compounds that are generated due to the combustion of the energy storage medium at the energy-demanding location, as it reduces local emissions and can be reused in a process for generating an energy storage medium. For example, captured carbon dioxide generated by combusting SNG can be reused in a Sabatier process to generate new SNG, thereby providing a closed-loop carbon cycle. SNG generated from green hydrogen and captured or recycled carbon dioxide may also be referred to as electric natural gas, eNG. The energy storage medium should thus be transported from the energy-harvesting location to the energy-demanding location and the captured waste compounds should be transported from the energy-demanding location back to the energy-harvesting location.

This has the problem that an energy storage medium and a waste compound typically have vastly different storage conditions, thereby requiring dedicated storage tanks for storing the energy storage medium and for storing the waste compound. For example, liquified SNG can be transported in a dedicated storage tank at around - 162°C at 1 bar, while liquified carbon dioxide may be transported in a dedicated storage tank at around -50°C and 7 bar. This has the problem that the transport can be inefficient as a different ship or train may be required for transporting the energy storage medium one way and transporting the waste compound the other way.

Alternatively, the same storage tanks can be used for both compounds. However, this requires switching between the storage conditions for the energy storage medium and the waste compound. The large difference in storage temperatures result in a lengthy unloading and loading process of the storage tanks, as switching the storage conditions should be performed gradually to avoid thermal deformation of the storage tank walls and/or the storage tank insulation. The efficiency of the unloading and loading process may further be hindered by solidification of liquified or gaseous compounds involved in the process. A lengthy unloading and loading process substantially increases the period of time during which a ship remains docked, resulting in increased costs.

### Summary of the Invention

It is an object of the present invention, amongst others, to solve or alleviate the above identified problems and challenges by providing a method and a system that reduce the time needed for unloading a stored cryogenic liquid from a storage tank and loading the storage tank with a substitute cryogenic liquid having substantially different storage conditions.

According to a first aspect, this object is achieved by a method for unloading a stored cryogenic liquid from a storage tank and loading the storage tank with a substitute cryogenic liquid; wherein one of the cryogenic liquids, a first cryogenic liquid, has a lower storage pressure and a lower storage temperature relative to the other cryogenic liquid, a second cryogenic liquid; wherein the first cryogenic liquid is obtainable from the second cryogenic liquid by one or more conversion steps, and the second cryogenic liquid is obtainable from the first cryogenic liquid by one or more conversion steps; the method comprising:
- unloading the stored cryogenic liquid from the storage tank;
- while unloading the stored cryogenic liquid, injecting a purging gas into the storage tank at a pressure at least equal to the storage pressure of the stored cryogenic liquid; wherein the purging gas has a temperature such that the temperature of the purging gas and the stored cryogenic liquid at their interface remains above a freezing temperature of the purging gas and the stored cryogenic liquid, respectively;
- when a substantial portion of the storage tank is filled with the purging gas, adjusting the temperature of the storage tank to the storage temperature of the substitute cryogenic liquid;
- when the temperature of the storage tank is within a predetermined range of the storage temperature of the substitute cryogenic liquid, loading the storage tank with the substitute cryogenic liquid; and
- while loading the substitute cryogenic liquid, removing the purging gas from the storage tank that is pressurized at or above the storage pressure of the substitute cryogenic liquid by loading the storage tank.

The stored cryogenic liquid and the substitute cryogenic liquid are thus different compounds that have different storage conditions, i.e. the first cryogenic liquid and the second cryogenic liquid. If the stored cryogenic liquid is the first cryogenic liquid, the substitute cryogenic liquid is the second cryogenic liquid. If the stored cryogenic liquid is the second cryogenic liquid, the substitute cryogenic liquid is the first cryogenic liquid. The first and second cryogenic liquids are obtainable from one another by one or more conversion steps, e.g. a Sabatier process, an oxy-combustion process, a combustion process, a reforming process, a pyrolysis process, a co-electrolysis, a separation capture process, and a liquefication process. The one or more conversion steps may include interaction of the first or second cryogenic liquid with one or more additional compounds. The first cryogenic liquid may, for example, be an energy storage medium generated by a power-to-gas process. The second cryogenic liquid may, for example, be a waste compound generated by utilization of the energy storage medium.

The storage tank may be transported by freight transport, e.g. by a ship, vessel, train, or truck. Unloading the stored cryogenic liquid from the storage tank may be performed while the freight transport is stationed, e.g. while a ship is docked in a harbour, a train is stationed in a railway station, or a truck is parked at an industrial site. Unloading the stored cryogenic liquid may be performed by discharging the stored cryogenic liquid from the bottom of the storage tank to an on-site storage tank, e.g. a dockside storage tank or depot storage tank. This can, for example, be achieved by pumping the stored cryogenic liquid by means of a deep well pump at the bottom of the storage tank, one or more pumps on board of the freight transport, or one or more on-site pumps at the unloading location.

While the unloading is ongoing, a purging gas is injected into the storage tank to assist in displacing and unloading the stored cryogenic liquid. The purging gas may be injected from a top portion of the storage tank, i.e. an opposite side of the storage tank from where the stored cryogenic liquid is being discharged. The purging gas may be an inert gas such as, for example, nitrogen, argon, helium, carbon dioxide, dry air, methane, or eNG. Advantageously, the purging gas has a temperature such that the temperature of the purging gas and the temperature of the stored cryogenic liquid remain above their respective freezing temperatures at the interface between the purging gas and the stored cryogenic liquid. This allows avoiding solidification of the purging gas and the stored cryogenic liquid. This has the advantage that unloading the stored cryogenic liquid can be performed faster and more efficient, as the formation of solids in the storage tank hinder discharging of the storage tank.

When a substantial portion of the storage tank is filled with the purging gas, i.e. a substantial portion of the stored cryogenic liquid has been unloaded, the temperature of the storage tank is adjusted from the storage temperature of the stored cryogenic liquid to the storage temperature of the substitute cryogenic liquid. Adjusting the temperature may include increasing or decreasing the temperature, depending on whether the first or second cryogenic liquid is the stored cryogenic liquid.

When the temperature of the storage tank approaches the storage temperature of the substitute cryogenic liquid, the storage tank is loaded with the substitute cryogenic liquid. Loading is thus initiated before the storage tank has completely reached the storage temperature of the substitute cryogenic liquid. This has the advantage that the unloading and loading process can be performed faster and more efficient. Loading the substitute cryogenic liquid may be performed by pumping the substitute cryogenic liquid from an on-site storage tank to the bottom of the storage tank. This can, for example, be achieved by pumping the substitute cryogenic liquid by means of a deep well pump at the bottom of the storage tank, one or more pumps on board of the freight transport, or one or more on-site pumps.

By loading the storage tank from the bottom, the pressure of the purging gas within the storage tank gradually increases. Purging gas that is pressurized at or above the storage pressure of the substitute cryogenic liquid is removed from the storage tank, e.g. by means of a control valve located at the top of the storage tank. In doing so, the storage tank is pressurized to the storage pressure of the substitute cryogenic liquid.

The method allows switching between different storage conditions in a time efficient manner, thereby avoiding lengthy stationing times of the freight transport for switching between the storage conditions. It is thus an advantage that this can reduce the cost of using the same storage tank for transporting different cryogenic liquids at substantially different storage conditions. It is a further advantage that this enables more cost-efficient transport of a first cryogenic liquid on an outward journey and transport of a second cryogenic liquid on the return journey by the same freight transport.

According to an example embodiment, the first cryogenic liquid may be liquefied synthetic natural gas that has a storage pressure of at most 1 bar gauge and a storage temperature of at most the boiling temperature of liquefied synthetic natural gas at the storage pressure; and the second cryogenic liquid may be liquefied carbon dioxide that has a storage pressure of around 4.2 bar gauge to around 20.0 bar gauge and a storage temperature of at most the boiling temperature of liquefied carbon dioxide at the storage pressure.

Synthetic natural gas, SNG, is an alternative fuel gas to natural gas. SNG may be produced through one or more conversion steps in a power-to-gas process that convert carbon-based feedstocks into a gas mixture with similar properties and composition to natural gas. The primary component of SNG may be methane, CH₄. The SNG may, for example, be produced by a power-to-gas process wherein electric energy from renewable energy sources is converted into SNG. An example of such a power-to-gas process is a Sabatier process, wherein SNG is generated from green hydrogen and captured or recycled carbon dioxide. SNG generated from green hydrogen and captured or recycled carbon dioxide may also be referred to as electric natural gas, eNG.

According to an example embodiment, the purging gas may be a gaseous form of the first cryogenic liquid.

In other words, the storage tank may be injected with a gaseous form of the first cryogenic liquid to assist in displacing and unloading the stored cryogenic liquid, i.e. the first or second cryogenic liquid. This has the advantage that the purging gas does not need to be cleared from the storage tank before loading it with the substitute cryogenic liquid if the stored cryogenic liquid is the second cryogenic liquid, as the storage tank will subsequently be loaded with the first cryogenic liquid as the substitute cryogenic liquid. If the stored cryogenic liquid is the first cryogenic liquid, the purging gas neither has to be cleared from the storage tank before loading it with the substitute cryogenic liquid if their mixture can be used in a chemical process, e.g. a mixture of SNG and carbon dioxide gas can be used in an oxy-combustion process. This further reduces the time needed for unloading and loading the storage tank.

According to an example embodiment, adjusting the temperature of the storage tank comprises cooling the storage tank walls by spray-cooling with the first cryogenic liquid.

The storage tank may be cooled when unloading the second cryogenic liquid and loading the first cryogenic liquid, as the second cryogenic liquid has a higher storage temperature than the first. Spray-cooling can be achieved by injecting the first cryogenic liquid through nozzles mounted on or within the walls of the storage tank. In doing so, droplets of the injected first cryogenic liquid are provided equally over the inner wall surface of the storage tank. The temperature of the sprayed first cryogenic liquid may be the storage temperature of the first cryogenic liquid. As the storage tank has a higher temperature than the sprayed first cryogenic liquid, i.e. a temperature around the storage temperature of the second cryogenic liquid, the sprayed droplets evaporate quickly and provide a cooling effect on the storage tank walls.

According to an example embodiment, the method may further comprise, while spray-cooling the storage tank, removing the purging gas from the storage tank that is pressurized at or above the storage pressure of the substitute cryogenic liquid.

The evaporation of the sprayed first cryogenic liquid droplets increase the pressure within the storage tank. In other words, the spray-cooling increases the storage tank pressure. Purging gas from the storage tank that is pressurized at or above the storage pressure of the substitute cryogenic liquid allows controlling the pressure within the storage tank and/or the pressure of the removed purging gas. It is an advantage that the pressure within the storage tank can be controlled according to the desired storage pressure of the substitute cryogenic liquid. It is a further advantage that the pressure of the removed purging gas can be controlled according to a process in which the removed purging gas may be subsequently used.

According to an example embodiment, adjusting the temperature of the storage tank may comprise heating the storage tank walls by means of one or more heating elements, waste heat, or recirculating the purging gas.

The storage tank may be heated when unloading the first cryogenic liquid and loading the second cryogenic liquid, as the first cryogenic liquid has a lower storage temperature than the second cryogenic liquid. The one or more heating elements may, for example, be electrical elements or heat tracing elements provided within or adjacent to the storage tank walls. Alternatively, heat exchanger tubing can be provided within or adjacent to the storage tank walls to heat the storage tank by passing waste heat or the recirculated purging gas through them.

According to an example embodiment, the method may further comprise providing a gas extracted from the storage tank to a chemical process for obtaining the first cryogenic liquid or the second cryogenic liquid from the extracted gas by one or more conversion steps; wherein the extracted gas comprises the purging gas, a gas of vaporized stored cryogenic liquid, a gas of vaporized substitute cryogenic liquid, or a mixture thereof.

The composition of the extracted gas may depend on when the gas is extracted from the storage tank, i.e. during which step of the method for unloading and loading the storage tank the gas is extracted. The extracted gas may be obtained from the storage tank during unloading of the stored cryogenic liquid, removing of the purging gas from the storage tank by loading the storage tank with the substitute cryogenic liquid, increasing of the temperature of the storage tank, and/or decreasing of the temperature of the storage tank by spray-cooling.

The composition of the vaporized substitute cryogenic gas may depend on whether the first or second cryogenic liquid is used as the substitute cryogenic liquid, and the composition of the substitute cryogenic liquid. The composition of the vaporized stored cryogenic gas may depend on whether the first or second cryogenic liquid is used as the stored cryogenic liquid, and the composition of the stored cryogenic liquid. The composition of the extracted gas may further depend on the composition of the purging gas.

A gas of vaporized stored cryogenic liquid may, for example, be generated near the end of unloading the second cryogenic liquid as the stored cryogenic liquid from the storage tank, as the pressure of the second cryogenic liquid decreases by the progressively emptied storage tank, resulting in boiling of the second cryogenic liquid. This gas of vaporized stored cryogenic liquid may form a mixture with the purging gas injected within the storage tank during the unloading.

The gas of vaporized substitute cryogenic liquid may, for example, be generated when loading the storage tank with the second cryogenic liquid as the substitute cryogenic liquid. The extracted gas may further comprise vaporized first cryogenic liquid that evaporated during the spray-cooling of the storage tank or while increasing the temperature of the storage tank.

According to an example embodiment, the chemical process may be selected from a group comprising a Sabatier process, an oxy-combustion process, a combustion process, a reforming process, a pyrolysis process, a co-electrolysis, a separation capture process, and a liquefication process.

According to a second aspect, the invention relates to a system for unloading a stored cryogenic liquid from a storage tank and loading the storage tank with a substitute cryogenic liquid; wherein one of the cryogenic liquids, a first cryogenic liquid, has a lower storage pressure and a lower storage temperature relative to the other cryogenic liquid, a second cryogenic liquid; wherein the first cryogenic liquid is obtainable from the second cryogenic liquid by one or more conversion steps, and the second cryogenic liquid is obtainable from the first cryogenic liquid by one or more conversion steps; the system comprising:
- one or more storage tanks configured to store a cryogenic liquid;
- one or more unloading means configured to unload the stored cryogenic liquid from the one or more storage tanks;
- one or more loading means configured to load the one or more storage tanks with the substitute cryogenic liquid;
- an injection system configured to inject a purging gas into the storage tank at a pressure at least equal to the storage pressure of the stored cryogenic liquid; wherein the purging gas has a temperature above the freezing temperature of the stored cryogenic liquid;
- a monitoring system configured to determine a portion of the storage tank filled with the purging gas;
- a temperature control system configured to adjust the temperature of the storage tank to the storage temperature of the substitute cryogenic liquid when the portion of the storage tank filled with the purging gas exceeds a threshold;
- a pressure control system configured to remove the purging gas from the storage tank that is pressurized equal or above the storage pressure of the substitute cryogenic liquid.

According to an example embodiment, an outer wall of the respective one or more storage tanks may be covered with insulating foam elements configured to conform to a thermal deformation of the outer wall.

The insulating foam elements may thus be configured to accommodate thermal deformation of the outer storage tank wall due to adjusting the temperature of the storage tank from the storage temperature of the stored cryogenic liquid to the storage temperature of the substitute cryogenic liquid, and vice-versa. Thermal deformation refers to thermal expansion and thermal contraction. This reduces the time needed for unloading and loading the storage tank as the temperature of the storage tank can be adjusted faster without causing degradation, damage, and/or detachment of the insulation due to rapid temperature changes.

According to an example embodiment, the respective one or more storage tanks may be enclosed by a casing, and an enclosed volume between an outer wall of a respective storage tank and an inner wall of the casing may be filled with insulating elements that are in moveable contact with each other.

The contact surface between the insulating elements may be limited, thereby limiting heat transfer by heat conductivity. The insulating elements may, for example, be shaped substantially as marbles or spheres. The insulating elements may have a limited ability to move within the enclosed volume without losing contact with other insulating elements, the inner wall of the casing, and/or the outer wall of the storage tank. As such, the insulating elements allow accommodating thermal deformation of the outer storage tank wall. This reduces the time needed for unloading and loading the storage tank as the temperature of the storage tank can be adjusted faster without causing degradation, damage, and/or detachment of the insulation due to rapid temperature changes.

According to an example embodiment, the system may further comprise a vacuum pump configured to generate a vacuum within the enclosed volume.

The vacuum avoids internal air flow within the enclosed volume. This limits heat transfer by convection from the outer wall of the storage tank. The insulating elements may further provide structural support for the casing. This allows the casing to be made of relatively thin plated material, e.g. steel or plastic, without collapsing under the vacuum. This has the advantage that the system can be light weight.

According to an example embodiment, the insulating elements may be made of a light-weight material characterized by a low heat transfer coefficient.

According to an example embodiment, the insulating elements may further comprise an outer layer made of a heat-reflecting material.

This improves the insulation of the storage tank by limiting radiant heat transfer from the outer wall of the storage tank.

According to a third aspect, the invention relates to a ship comprising the system according to the second aspect.

According to an example embodiment, the one or more storage tanks may be enclosed within a hull of the ship, and wherein the hull comprises an insulating material.

In other words, the hull of a ship that holds the storage tanks is insulated instead of insulating the individual storage tanks. The insulating material may, for example, be attached to the inside surface of the hull. The lack of surface contact by an insulating material with the storage tanks limits the heat transfer by conductivity. The limited air flow within the hull, i.e. the insulated volume, can further limit the heat transfer through convection.

According to an example embodiment, the hull may further comprise an inner layer made of a heat-reflecting material.

For example, the insulating material facing towards the insulated volume may be covered with the heat-reflecting material. This limits radiant heat transfer.

According to an example embodiment, the ship may further comprise an air dehydration unit configured to dehydrate the air within the hull.

By dehydrating the air within the insulated volume, condensation and/or ice formation on the outer surface of the storage tanks can be avoided.

### Brief Description of the Drawings

Fig. 1 shows an example of transporting an energy storage medium from an energy-harvesting location to an energy-demanding location and transporting a waste compound from the energy-demanding location back to the energy-harvesting location;
Fig. 2 shows steps according to a method for unloading a stored cryogenic liquid from a storage tank and loading the storage tank with a substitute cryogenic liquid, according to example embodiments;
Fig. 3 shows an example embodiment of unloading liquefied carbon dioxide from a storage tank and loading the storage tank with liquefied synthetic natural gas, SNG;
Fig. 4 shows an example embodiment of unloading liquefied synthetic natural gas, SNG, from a storage tank and loading the storage tank with liquefied carbon dioxide;
Fig. 5A shows an example embodiment of an insulating system for a storage tank configured to store a first and a second cryogenic liquid; and
Fig. 5B shows an example embodiment of an alternative insulation system for insulating storage tanks configured to store the first and second cryogenic liquid on board of a ship.

### Detailed Description of Embodiment(s)

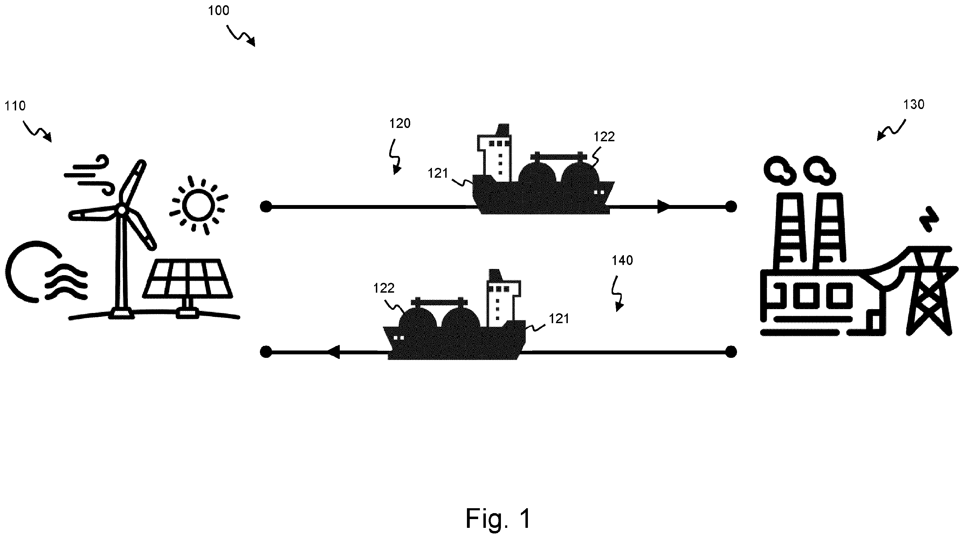

Fig. 1 shows an example 100 of transporting 120 an energy storage medium from an energy-harvesting location 110 to an energy-demanding location 130 and transporting 140 a waste compound from the energy-demanding location 130 back to the energy-harvesting location 110. The energy-harvesting location 110 is a geographical area where an abundance of renewable energy is available. The abundance of renewable energy may result from an excess availability of renewable energy sources, e.g. solar energy in solar belt countries or hydropower in Canada, or may result from a decreased energy demand, or both. The energy-demanding location 130 is a geographical area where the energy demand is high, relative to the availability of renewable energy in that area. This may be an industrialised region, e.g. located in Western Europe. The energy-harvesting location 110 and the energy-demanding location 130 are different geographical areas, in the sense that they are typically separated by a relatively long distance. A long-distance transport connection 120 exists between the energy-harvesting location 110 and the energy-demanding location 130, and a long-distance transport connection 140 exists between the energy-demanding location 130 and the energy-harvesting location 110. The transport connections 120, 140 may be intercontinental, e.g. from the Middle East to Western Europe, or international, e.g. from Spain to German, or interregional, e.g. from one US state to another US state.

To address the geographical mismatch between renewable energy availability and energy demand, excess renewable energy can be converted into an energy storage medium or energy-dense carrier at the energy-harvesting location 110. For example, green hydrogen can be produced at the energy-harvesting location 110 through the electrolysis of water wherein the electrolysis is powered by excess renewable energy. From this green hydrogen, a transportable energy storage medium can then be generated such as, for example, synthetic natural gas, SNG. SNG can for example be generated from the green hydrogen and carbon dioxide in a Sabatier process. The Sabatier reaction CO2 + 4H2 → CH4 + 2 H2O, results in a mixture of methane and water, from which H2O is separated. This results in SNG created in the energy-harvesting location, which may be prepared for transport, e.g. via liquefaction.

The energy storage medium may be loaded into storage tanks 122 for transportation 120 to the energy-demanding location 130. The storage tanks 122 may be transported 120 by freight transport, e.g. by a ship, vessel, train, or truck. The energy storage medium may be unloaded from the storage tanks 122 at the energy-demanding location 130, where it may be utilized to generate energy. To this end, a group of SNG conversion facilities may be present at the energy-demanding location 130. The group of conversion facilities may comprise an oxy-combustion power plant, an oxy-combustion facility, a hydrogen production facility, and/or an industrial production plant. The oxy-combustion power plant may for example be an Allam-Fetvedt power plant. The oxy-combustion facility may for example be an industrial plant applying an oxy-combustion for heating purposes, or a vehicle with an oxy-combustion engine. The industrial production plant may for example be a plant for the production of steel, cement, or chemicals.

The utilization of the energy storage medium typically involves generating waste compounds such as, for example, carbon dioxide. It can be desirable to separate and capture waste compounds that are generated, as it reduces local emissions, and some can be reused in a process for generating an energy storage medium. For example, captured carbon dioxide generated by oxy-combusting SNG can be reused in a Sabatier process to generate new SNG. SNG generated from green hydrogen and captured or recycled carbon dioxide may also be referred to as electric natural gas, eNG. To this end, waste compounds captured at the energy-demanding location 130 may be transported 140 back to the energy-harvesting location 110. Before transport, a preparation step may take place, e.g. for liquifying a waste compound. The waste compound may be loaded into storage tanks 122 for transportation 140 back to the energy-harvesting location 110. The storage tanks 122 may be transported 120 by freight transport, e.g. by a ship, vessel, train, or truck.

This has the problem that typical energy storage mediums and typical waste compounds have vastly different storage conditions, thereby requiring dedicated storage tanks 122 for storing the energy storage medium and for storing the waste compound. For example, liquified SNG can be transported in a dedicated storage tank at around -162°C at 1 bar, while liquified carbon dioxide may be transported in a dedicated storage tank at around -50°C and 7 bar. This may, for example, necessitate the use of a different ship for transporting 120 the energy storage medium one way and transporting 140 the waste compound the other way. This can be costly, as the respective ships may have to sail without cargo on their return voyage.

It can thus be desirable to use the same storage tanks 122 for transporting the energy storage medium one way 120 and the waste compound the other way 140. This requires switching between the storage conditions for the energy storage medium and the waste compound. The large difference in storage temperatures result in a lengthy unloading and loading process of the storage tanks, as switching the storage conditions should be performed gradually to avoid thermal stress to the structure of the storage tanks and/or insulation of the storage tanks. The efficiency of the unloading and loading process may further be hindered by solidification of liquified or gaseous compounds involved in the process. A lengthy unloading and loading process substantially increases the period of time during which a ship remains docked, resulting in increased costs.

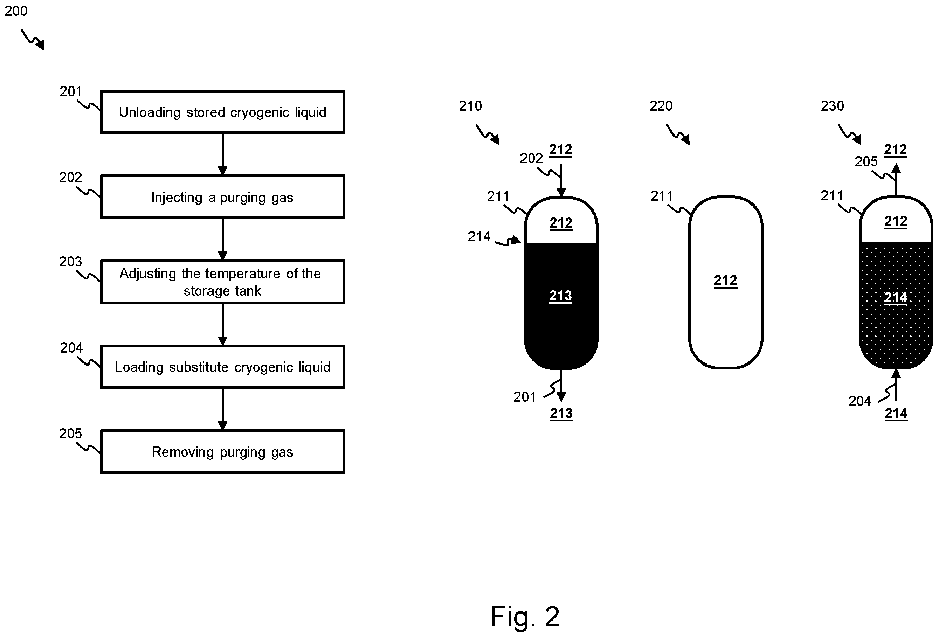

Fig. 2 shows steps 200 according to a method for unloading 210 a stored cryogenic liquid 213 from a storage tank 211 and loading 230 the storage tank with a substitute cryogenic liquid 214 that solves or alleviates the above identified problems and challenges.

The stored cryogenic liquid 213 and the substitute cryogenic liquid 214 are different compounds that have different storage conditions, i.e. a different storage temperature and pressure. The stored cryogenic liquid 213 is a first cryogenic liquid or a second cryogenic liquid. The substitute cryogenic liquid 214 is the cryogenic liquid different from the stored cryogenic liquid 213. In other words, if the stored cryogenic liquid 213 is the first cryogenic liquid, the substitute cryogenic liquid 214 is the second cryogenic liquid. Vice-versa, if the stored cryogenic liquid 213 is the second cryogenic liquid, the substitute cryogenic liquid 214 is the first cryogenic liquid. The first cryogenic liquid has a lower storage temperature and a lower storage pressure relative to the second cryogenic liquid. The first and second cryogenic liquids, i.e. the stored 213 and substitute 214 cryogenic liquids, are obtainable from one another by one or more conversion steps. These one or more conversion steps may include a Sabatier process, an oxy-combustion process, a combustion process, a reforming process, a pyrolysis process, a co-electrolysis, a separation capture process, and a liquefication process. It will be apparent that the one or more conversion steps may include interaction of the first or second cryogenic liquid with one or more additional compounds.

The first cryogenic liquid may, for example, be an energy storage medium generated by a power-to-gas process at the energy-harvesting location 110 in Fig. 1. The second cryogenic liquid may, for example, be a waste compound generated at the energy-demanding location 130 in Fig. 1, by utilization of the energy storage medium. According to an embodiment, the first cryogenic liquid may be liquefied synthetic natural gas, SNG, and the second cryogenic liquid may be liquefied carbon dioxide.

The storage tank 211 may be transported by freight transport, e.g. by a ship, vessel, train, or truck. The freight transport may transport SNG, i.e. the first cryogenic liquid, from the energy-harvesting location 110 to the energy-demanding location 130. The same freight transport may transport captured carbon dioxide, i.e. the second cryogenic liquid, from the energy-demanding location 130 to the energy-harvesting location 110. The steps 200 for unloading and loading the cryogenic liquids may be performed while the freight transport is stationed at the energy-harvesting location 110 or the energy-demanding location 130. For example, steps 200 may be performed while a ship is docked in a harbour, a train is stationed in a railway station, or a truck is parked at an industrial site.

In a first step 201, the stored cryogenic liquid 213 is unloaded 201 from the storage tank 211. The unloading can be performed by discharging the stored cryogenic liquid 213 from the bottom of the storage tank 211. This can, for example, be achieved by pumping the stored cryogenic liquid 213 by means of a deep well pump at the bottom of the storage tank 211, one or more pumps on board of the freight transport, or one or more on-site pumps at the unloading location.

The stored cryogenic liquid 213 discharged from the storage tank 211 can be pumped to an on-site storage tank for storage, e.g. a dockside storage tank or depot storage tank. Alternatively, the stored cryogenic liquid 213 discharged from the storage tank 211 can be distributed at the unloading location for conversion into a usable form of energy or for conversion into an energy storage medium.

In step 202, a purging gas 212 is injected into the storage tank 211. It will be apparent that step 202, although illustrated sequentially to step 201 in Fig. 2, may be performed while step 201 has not been completed yet. In other words, the purging gas 212 is injected into the storage tank 211 while the stored cryogenic liquid 213 is still being unloaded 201. The injected purging gas 212 has a pressure at least equal to the storage pressure of the stored cryogenic liquid 213. The purging gas may be injected from a top portion of the storage tank 211, i.e. an opposite side of the storage tank from where the stored cryogenic liquid is being discharged. As such, the purging gas assists in displacing and unloading 201 the stored cryogenic liquid 213.

Advantageously, the purging gas 212 is injected at a temperature such that the temperature of the purging gas 212 and the temperature of the stored cryogenic liquid 213 remain above their respective freezing temperatures at the interface 214 between the purging gas 212 and the stored cryogenic liquid 213. Suitable temperatures for the purging gas 212 depend on the freezing temperature of the stored cryogenic liquid 213, the freezing temperature of the purging gas 212, and the storage temperature of the stored cryogenic liquid 213. A suitable temperature for the injected purging gas 212 may be sufficiently above the freezing temperature of the stored cryogenic liquid 213 to avoid that the purging gas 212 cools the stored cryogenic liquid 213 below its freezing temperature at their interface 214. A suitable temperature for the purging gas 212 may also be sufficiently above the freezing temperature of the purging gas 212 to avoid that the stored cryogenic liquid cools the purging gas below its freezing temperature at their interface 214. This allows avoiding solidification of the purging gas 212 and the stored cryogenic liquid 213. This has the advantage that unloading 201 the stored cryogenic liquid 213 can be performed faster and more efficient, as the formation of solids in the storage tank 211 hinder discharging of the storage tank.

The purging gas 212 may be an inert gas such as, for example, nitrogen, argon, helium, carbon dioxide, or dry air. Preferably, the purging gas 212 may be a gaseous form of the first cryogenic liquid, e.g. gaseous SNG. In other words, if the stored cryogenic liquid is the first cryogenic liquid, the purging gas may have the same composition as the stored cryogenic liquid. This has the advantage that the purging gas 212 does not need to be cleared from the storage tank 211 before loading 204 it with the substitute cryogenic liquid 214 if the mixture of the purging gas 212 and the substitute cryogenic liquid 214 can be used in a chemical process, e.g. a mixture of SNG and carbon dioxide gas can be used in an oxy-combustion process. Alternatively, if the stored cryogenic liquid 213 is the second cryogenic liquid, the purging gas 212 may have the same composition as the substitute cryogenic liquid 214. This has the advantage that the purging gas 212 does not need to be cleared from the storage tank 211 before loading 204 it with the substitute cryogenic liquid 214, as the storage tank 211 will subsequently be loaded with the first cryogenic liquid as the substitute cryogenic liquid.

When a substantial portion of the storage tank 211 is filled with the purging gas 212, i.e. when a substantial portion of the stored cryogenic liquid 213 has been unloaded 201, the temperature of the storage tank is adjusted in step 203. This may, but need not, be when the entire 220 storage tank is filled with purging gas. In step 203, the temperature of the storage tank 211 is adjusted from the storage temperature of the stored cryogenic liquid 213 to the storage temperature of the substitute cryogenic liquid 214. Adjusting the temperature may include increasing or decreasing the temperature, depending on whether the first or second cryogenic liquid is the stored cryogenic liquid, i.e. whether the stored cryogenic liquid has a lower or higher storage temperature relative to the substitute cryogenic liquid.

Optionally, the pressure of the storage tank may be adjusted to the storage pressure of the substitute cryogenic liquid before loading the storage tank with the substitute cryogenic liquid. This can avoid solidification of the loaded substitute cryogenic liquid. It will be apparent that performing this step may or may not be desired depending on the storage conditions of the stored cryogenic liquid, the storage conditions of the substitute cryogenic liquid, and the properties of the used purging gas.

When the temperature of the storage tank 211 is within a predetermined range of the storage temperature of the substitute cryogenic liquid 214, the storage tank 211 is loaded 204 with the substitute cryogenic liquid in step 204. In other words, the loading 204 may be initiated before the storage tank 211 has completely reached the storage temperature of the substitute cryogenic liquid. The predetermined range at which the loading may be initiated depends on the properties of the substitute cryogenic liquid 214 and/or the purging gas 212. This has the advantage that the unloading and loading process can be performed faster and more efficient. Optionally, the storage tank may only be loaded with the substitute cryogenic liquid in step 204 when the pressure of the storage tank is within a predetermined range of the storage pressure of the substitute cryogenic liquid 214.

The loading 204 can be performed by filling the storage tank 211 with substitute cryogenic liquid 214 from the bottom. This can, for example, be achieved by pumping the substitute cryogenic liquid 213 by means of a deep well pump at the bottom of the storage tank 211, one or more pumps on board of the freight transport, or one or more on-site pumps at the unloading location. The substitute cryogenic liquid 214 pumped into the storage tank 211 may be pumped from an on-site storage tank, e.g. a dockside storage tank or depot storage tank.

By loading the storage tank 211 from the bottom, the pressure of the purging gas 212 within the storage tank gradually increases. Purging gas that is pressurized at or above the storage pressure of the substitute cryogenic liquid 214 is removed 205 from the storage tank, e.g. by means of a control valve located at the top of the storage tank. In doing so, the storage tank is pressurized to the storage pressure of the substitute cryogenic liquid 214.

The method allows switching between different storage conditions in a time efficient manner, thereby avoiding lengthy stationing times of the freight transport for switching between the storage conditions. It is thus an advantage that this can reduce the cost of using the same storage tank for transporting different cryogenic liquids at substantially different storage conditions. It is a further advantage that this enables more cost-efficient transport of a first cryogenic liquid on an outward journey and transport of a second cryogenic liquid on the return journey by the same freight transport.

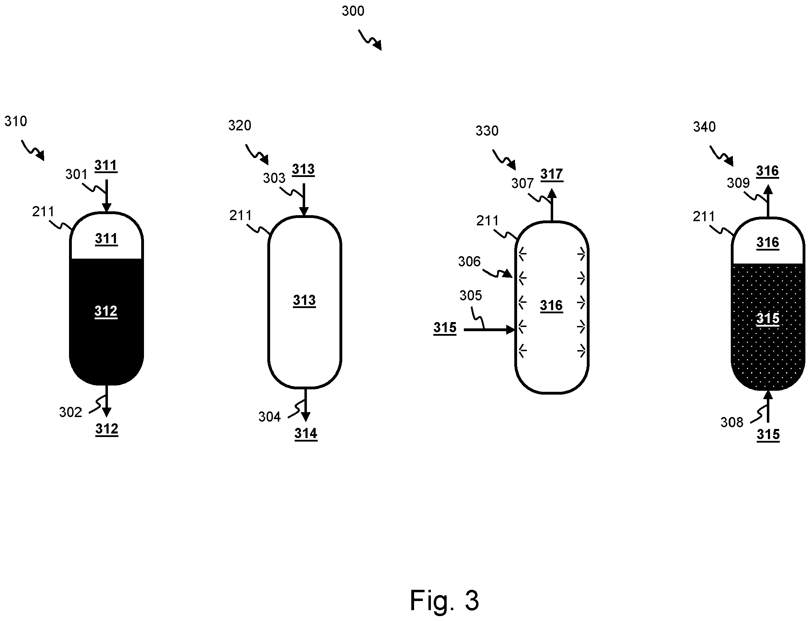

Fig. 3 shows an example embodiment of unloading 302 liquefied carbon dioxide 312 from a storage tank 211 and loading 308 the storage tank 211 with liquefied SNG 315. The liquefied carbon dioxide 312, i.e. the stored cryogenic liquid in this embodiment, may be stored at a storage pressure of around 4.2 bar gauge to around 20.0 bar gauge and a storage temperature of at most the boiling temperature of liquefied carbon dioxide at its storage pressure. The liquefied SNG 315, i.e. the substitute cryogenic liquid in this embodiment, may be stored at a storage pressure of at most 1 bar gauge and a storage temperature of at most the boiling temperature of liquefied SNG at its storage pressure. The liquefied SNG may, for example, be stored at around -162°C and at 1 bar gauge. The liquefied carbon dioxide may, for example, be stored at -50°C and at 7 bar gauge. As the storage temperature of liquefied carbon dioxide is higher than the storage temperature of liquefied SNG, the liquefied SNG is the first cryogenic liquid, and the liquefied carbon dioxide is the second cryogenic liquid in this embodiment.

In first steps 310 and 320, the liquefied carbon dioxide 312 may be unloaded 302 while injecting a purging gas 311, as discussed above in relation to steps 201 and 201 of Fig. 2. The injected purging gas 311 may preferably be a gaseous form of SNG, i.e. the first cryogenic liquid.

As the liquefied carbon dioxide 315 has a higher storage temperature than the liquefied SNG 312, the storage tank has to be cooled. The temperature of the storage tank 211 is reduced by spray-cooling the storage tank walls with liquefied SNG 315, i.e. the first cryogenic liquid. Spray-cooling can be achieved by injecting liquefied SNG 315 through nozzles 306 mounted on or within the walls of the storage tank 211. In doing so, droplets of the injected SNG 315 are provided equally over the inner wall surface of the storage tank 211. The sprayed SNG 315 may have a temperature around the desired storage temperature of the liquefied SNG 315 that will be loaded into the storage tank 211. As the storage tank has a higher temperature at that point in time, i.e. a temperature around the storage temperature of the liquefied carbon dioxide, the sprayed SNG droplets evaporate quickly and provide a cooling effect on the storage tank walls.

The sprayed SNG droplets evaporate quickly, thereby increasing the pressure within the storage tank 211. In other words, the spray-cooling increases the storage tank pressure. This pressure can be controlled by removing 307 purging gas 316 that is pressurized at or above the storage pressure of the liquefied SNG 315. This allows controlling the pressure within the storage tank 211 and/or the pressure of the removed purging gas 317. It is thus an advantage that the pressure within the storage tank 211 can be controlled according to the desired storage pressure of the substitute cryogenic liquid. The removed purging gas 317 may further be provided to a chemical process for obtaining liquefied SNG, i.e. the first cryogenic liquid. This chemical process may, for example, be a liquefication process. In doing so, the purging gas is neither lost nor vented to the atmosphere. It is a further advantage that the pressure of the removed purging gas can be controlled according to a process in which the removed purging gas may be subsequently used.

In a following step 340, the storage tank 211 may be loaded 308 with liquefied SNG 315, as discussed above in relation to step 204 of Fig. 2, and the remaining purging gas 316 that is pressurized at or above the storage pressure of the liquefied SNG 315 may be removed 309, as discussed above in relation to step 205 of Fig. 2. As both the purging gas 316 and the substitute cryogenic liquid 315 are SNG, the extracted gas 316 is SNG gas. This extracted gas 316 may further be provided to a chemical process for obtaining liquefied SNG, i.e. the first cryogenic liquid. This chemical process may, for example, be a liquefication process. In doing so, the extracted gas is neither lost nor vented to the atmosphere.

It will further be apparent that, near the end of unloading 302 the liquefied carbon dioxide, some carbon dioxide may vaporize within the storage tank 211, e.g. if the pressure of the liquefied carbon dioxide 312 decreases by the progressively emptied storage tank. This can result in some boil-off of the liquefied carbon dioxide 312, thereby generating a gas of vaporized stored cryogenic liquid. As such, the final portion unloaded 304 from the storage tank 211 may comprise a mixture of gaseous carbon dioxide and gaseous SNG, i.e. the purging gas 313. In other words, gradually, the discharged output 314 from the storage tank will turn into a mixture of carbon dioxide and SNG. This mixture can either be utilized in a Sabatier process, an oxy-combustion process, or can be stripped.

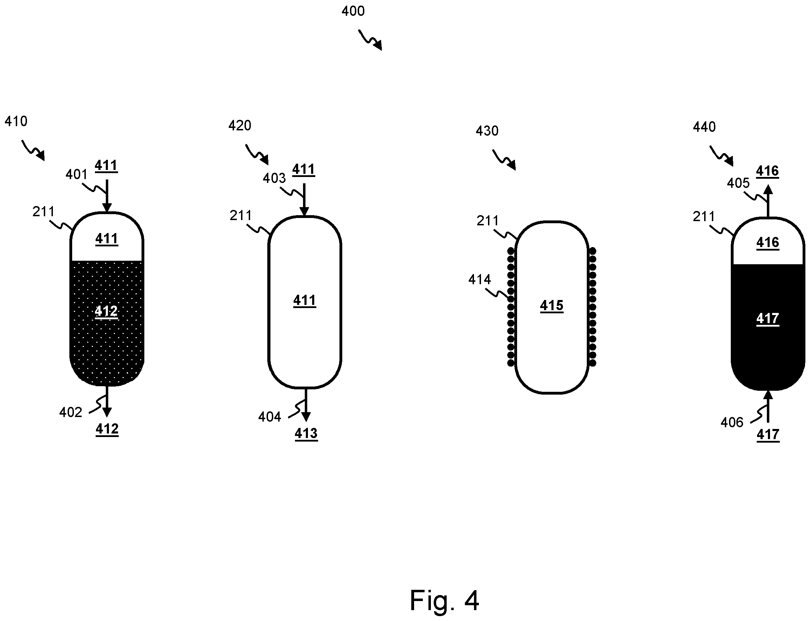

Fig. 4 shows an example embodiment of unloading 402 liquefied SNG 412 from a storage tank 211 and loading 406 the storage tank 211 with liquefied carbon dioxide 417. The liquefied SNG 412, i.e. the stored cryogenic liquid in this embodiment, may be stored at a storage pressure of at most 1 bar gauge and a storage temperature of at most the boiling temperature of liquefied SNG at its storage pressure. The liquefied carbon dioxide 417, i.e. the substitute cryogenic liquid in this embodiment, may be stored at a storage pressure of around 4.2 bar gauge to around 20.0 bar gauge and a storage temperature of at most the boiling temperature of liquefied carbon dioxide at the storage pressure. As the storage temperature of liquefied carbon dioxide is higher than the storage temperature of liquefied SNG, the liquefied SNG is the first cryogenic liquid, and the liquefied carbon dioxide is the second cryogenic liquid in this embodiment.

In first steps 410 and 420, the liquefied SNG 412 may be unloaded 402 while injecting a purging gas 411, as discussed above in relation to steps 201 and 201 of Fig. 2. The injected purging gas 411 may preferably be a gaseous form of SNG, i.e. the first cryogenic liquid.

As the liquefied carbon dioxide 417 has a higher storage temperature than the liquefied SNG 412, the storage tank has to be heated. The temperature of the storage tank 211 may be increased by heating the storage tank walls by means of one or more heating elements, waste heat, or recirculating the purging gas in step 430. The one or more heating elements may, for example, be electrical elements 414 or heat tracing elements 414 provided within or adjacent to the storage tank walls. Alternatively, heat exchanger tubing 414 can be provided within or adjacent to the storage tank walls to heat the storage tank by passing waste heat or the recirculated purging gas through them. Before loading the storage tank 211 with liquefied carbon dioxide 417, the pressure of the storage tank may be adjusted, i.e. increased, to the storage pressure of the liquefied carbon dioxide 417. This avoids solidification of the loaded liquefied carbon dioxide 417.

In a following step 440, the storage tank 211 may be loaded 406 with liquefied carbon dioxide 417, as discussed above in relation to step 204 of Fig. 2, and the remaining purging gas 416 that is pressurized at or above the storage pressure of the liquefied carbon dioxide 417 may be removed 405, as discussed above in relation to step 205 of Fig. 2. The extracted gas 416 may be a mixture of carbon dioxide, i.e. the substitute cryogenic liquid, and gaseous SNG, i.e. the purging gas 416. This extracted gas mixture 416 may further be provided to a chemical process, e.g. an oxy-combustion process.

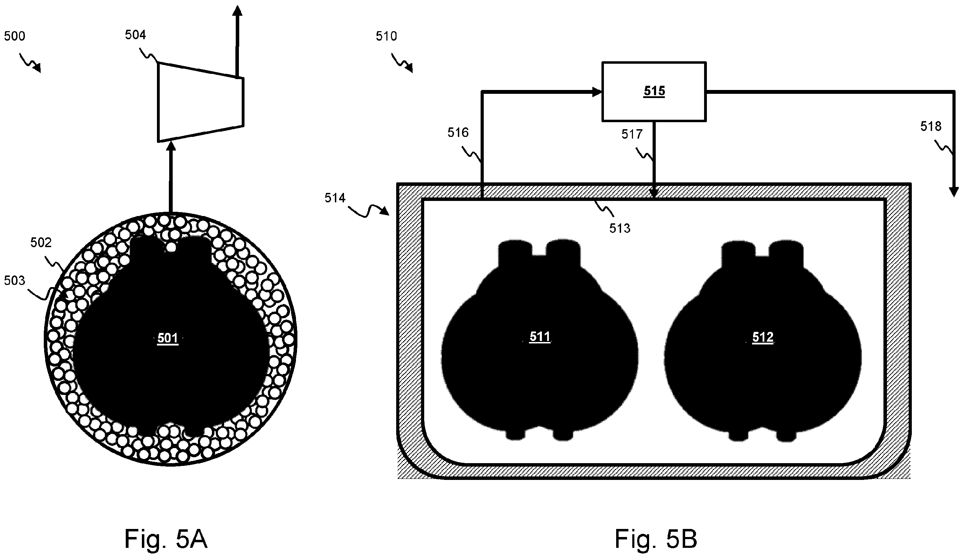

Fig. 5A shows an example embodiment of an insulating system 500 for a storage tank 501 configured to store the first and second cryogenic liquid. Typically, storage tanks for cryogenic liquids are insulated by an insulation material that is attached to the outer surface of the storage tank. Unloading and loading cryogenic liquids with substantially different storage conditions, in particular different storage temperatures, is typically performed gradually to avoid thermal deformation of the insulation material. In other words, the rate of unloading and loading cryogenic liquids with different storage temperatures is limited by the thermal stress induced in the insulation material when the storage tank temperature is adjusted, e.g. during step 203 in Fig. 2, step 330 in Fig. 3, and step 430 in Fig. 4.

To this end, the outer wall of the storage tank 501 may be covered with insulating foam elements (not shown in Fig. 5A) configured to conform to the thermal deformation of the outer wall. This can be achieved by enabling limited movement between the individual foam elements and the storage tank walls by means of, for example, the properties of the foam material wherefrom the insulation foam elements are made, and/or the geometries of the respective insulation foam elements. Such insulating foam elements thus allows accommodating thermal deformation of the outer storage tank wall due to adjusting the temperature of the storage tank. This reduces the time needed for unloading and loading the storage tank as the temperature of the storage tank can be adjusted faster without causing degradation, damage, and/or detachment of the insulation due to rapid temperature changes.

Alternatively, the storage tank 501 may be enclosed by a casing 502. The enclosed volume between the outer wall of the storage tank 501 and the inner wall of the casing 502 may further be filled with insulating elements 503. The insulating elements 503 may, for example, be shaped substantially as marbles or spheres. Preferably, the insulating elements 503 may be made of a light-weight material characterized by a low heat transfer coefficient. The enclosed volume may be filled such that the individual insulating elements 503 are in contact with other individual insulating elements, the inner wall of the casing 502, and/or the outer wall of the storage tank 501. The contact surface between the insulating elements may be limited, i.e. there may be voids or pores between the individual insulating elements 503. This limits heat transfer by heat conductivity. The insulating elements 503 may further have a limited ability to move within the enclosed volume without losing contact with other insulating elements, the inner wall of the casing 502, and/or the outer wall of the storage tank 501. In other words, the insulating elements are in moveable contact with each other. The movement of the insulating elements 503 can thus allow accommodating thermal deformation of the outer storage tank wall. This reduces the time needed for unloading and loading the storage tank 501 as the temperature of the storage tank can be adjusted faster without causing degradation, damage, and/or detachment of the insulation due to rapid temperature changes. Preferably, the insulating elements may further comprise an outer layer made of a heat-reflecting material, e.g. a coating. This can further improve the insulation of the storage tank 501 by limiting the radiant heat transfer from the outer wall of the storage tank 501.

The insulating system 500 may further comprise a vacuum pump 504 configured to generate a vacuum within the enclosed volume. The vacuum pump 504 thus allows achieving a substantial vacuum within the voids or pores between the individual insulating elements 503 within the enclosed volume. This avoids internal air flow within the enclosed volume, thereby limiting heat transfer by convection from the outer wall of the storage tank 501. The insulating elements 503 may further provide structural support for the casing 502. This allows the casing 502 to be made of relatively thin plated material, e.g. steel or plastic, without collapsing under the generated vacuum. This has the advantage that the insulating system 500 can be light weight.

The insulating system 500 may further be part of a system (not shown in Fig. 5A) for unloading a storage cryogenic liquid from the storage tank 501 and loading the storage tank 501 with a substitute cryogenic liquid. Such a system may further comprise one or more additional storage tanks provided with the insulating system 500. The system may further comprise one or more unloading means configured to unload the stored cryogenic liquid from the storage tanks 501, and one or more loading means configured to load the storage tanks 501 with the substitute cryogenic liquid. These means can, for example, be a deep well pump at the bottom of the storage tank 501, one or more pumps on board of a freight transport, or one or more on-site pumps at an unloading location.

The system may further comprise an injection system configured to inject a purging gas into the storage tank 501 during unloading of the storage tank, i.e. means to perform step 202 in Fig. 2. The system may further comprise a monitoring system configured to determine a portion of the storage tank filled with the purging gas. This can, for example, be means for monitoring the composition of the compound unloaded from the storage tank 501. The monitoring system allows determining when the storage tank 501 is sufficiently filled with purging gas to initiate the temperature adjustment, i.e. step 203 in Fig. 2. Adjusting the temperature may be initiated when the monitoring system determines that a portion of the storage tank 501 filled with the purging gas exceeds a threshold. Adjusting the temperature of storage tank 501 may be achieved by a temperature control system configured to adjust the temperature of the storage tank 501 to the storage temperature of the substitute cryogenic liquid. The system may further comprise a pressure control system configured to remove purging gas from the storage tank 501 that is pressurized at or above the storage pressure of the substitute cryogenic liquid.

Fig. 5B shows an example embodiment 510 of an alternative insulation system 510 for insulating storage tanks 511, 512 configured to store the first and second cryogenic liquid on board of a ship. In this embodiment, the storage tanks 511, 512 are provided within the hull 514 of a ship. The ship may transport the first cryogenic liquid within the storage tanks 511, 512 on an outward voyage, and transport the second cryogenic liquid within the storage tanks 511, 512 on the return voyage. The hull 514 may comprise an insulating material instead of insulating the individual storage tanks 511, 512. This can, for example, be achieved by attaching insulating material to the inner surface of the hull 514 or providing insulating material within the hull 514. The lack of surface contact between the insulating material and the storage tanks 511, 512 limits heat transfer by conductivity. Additionally, as there is limited air flow within the hull 514, heat transfer through convection can also be limited. The inner wall or inner layer 513 of the hull 514 may further be covered with reflecting material to limit radiant heat transfer. The insulating system 510 may further comprise an air dehydration unit 515 configured to dehydrate the air within the hull 514. The air dehydration unit 515 may extract moist air 516 from within the hull 514, dehydrate the moist air 516, and provide the dried air 517 to the hull. The extracted moisture may be disposed off, e.g. by discharging 518 it overboard. By dehydrating the air within the insulated volume, condensation and/or ice formation on the outer surface of the storage tanks 511, 512 can be avoided.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for unloading a stored cryogenic liquid (213) from a storage tank (211) and loading the storage tank with a substitute cryogenic liquid (214); wherein one of the cryogenic liquids, a first cryogenic liquid, has a lower storage pressure and a lower storage temperature relative to the other cryogenic liquid, a second cryogenic liquid; wherein the first cryogenic liquid is obtainable from the second cryogenic liquid by one or more conversion steps, and the second cryogenic liquid is obtainable from the first cryogenic liquid by one or more conversion steps; the method comprising:
- unloading (201) the stored cryogenic liquid from the storage tank;
- while unloading the stored cryogenic liquid, injecting (202) a purging gas (212) into the storage tank at a pressure at least equal to the storage pressure of the stored cryogenic liquid (213); wherein the purging gas has a temperature such that the temperature of the purging gas and the stored cryogenic liquid at their interface remains above a freezing temperature of the purging gas and the stored cryogenic liquid, respectively;
- when a substantial portion of the storage tank is filled with the purging gas, adjusting (203) the temperature of the storage tank to the storage temperature of the substitute cryogenic liquid (214);
- when the temperature of the storage tank is within a predetermined range of the storage temperature of the substitute cryogenic liquid, loading (204) the storage tank with the substitute cryogenic liquid (214); and
- while loading the substitute cryogenic liquid, removing (205) the purging gas (212) from the storage tank that is pressurized at or above the storage pressure of the substitute cryogenic liquid by loading the storage tank.

2. The method of claim 1, wherein the first cryogenic liquid is liquefied synthetic natural gas that has a storage pressure of at most 1 bar gauge and a storage temperature of at most the boiling temperature of liquefied synthetic natural gas at the storage pressure; and the second cryogenic liquid is liquefied carbon dioxide that has a storage pressure of around 4.2 bar gauge to around 20.0 bar gauge and a storage temperature of at most the boiling temperature of liquefied carbon dioxide at the storage pressure.

3. The method according to any of the preceding claims, wherein the purging gas is a gaseous form of the first cryogenic liquid.

4. The method according to any of the preceding claims, wherein adjusting (203) the temperature of the storage tank (211) comprises cooling (330) the storage tank walls by spray-cooling (306) with the first cryogenic liquid (315).

5. The method according to any of the preceding claims, wherein adjusting the temperature of the storage tank comprises heating (430) the storage tank walls by means of one or more heating elements (414), waste heat, or recirculating the purging gas.

6. The method according to any of the preceding claims, further comprising providing a gas extracted from the storage tank (304, 307, 309, 404, 405) to a chemical process for obtaining the first cryogenic liquid or the second cryogenic liquid from the extracted gas by one or more conversion steps; wherein the extracted gas comprises the purging gas, a gas of vaporized stored cryogenic liquid, a gas of vaporized substitute cryogenic liquid, or a mixture thereof.

7. The method according to claim 6, wherein the chemical process is selected from a group comprising a Sabatier process, an oxy-combustion process, a combustion process, a reforming process, a pyrolysis process, a co-electrolysis, a separation capture process, and a liquefication process.

8. A system for unloading a stored cryogenic liquid from a storage tank and loading the storage tank with a substitute cryogenic liquid; wherein one of the cryogenic liquids, a first cryogenic liquid, has a lower storage pressure and a lower storage temperature relative to the other cryogenic liquid, a second cryogenic liquid; wherein the first cryogenic liquid is obtainable from the second cryogenic liquid by one or more conversion steps, and the second cryogenic liquid is obtainable from the first cryogenic liquid by one or more conversion steps; the system comprising:
- one or more storage tanks configured to store a cryogenic liquid;
- one or more unloading means configured to unload the stored cryogenic liquid from the one or more storage tanks;
- one or more loading means configured to load the one or more storage tanks with the substitute cryogenic liquid;
- an injection system configured to inject a purging gas into the storage tank at a pressure at least equal to the storage pressure of the stored cryogenic liquid; wherein the purging gas has a temperature such that the temperature of the purging gas and the stored cryogenic liquid at their interface remains above a freezing temperature of the purging gas and the stored cryogenic liquid, respectively;
- a monitoring system configured to determine a portion of the storage tank filled with the purging gas;
- a temperature control system configured to adjust the temperature of the storage tank to the storage temperature of the substitute cryogenic liquid when the portion of the storage tank filled with the purging gas exceeds a threshold;
- a pressure control system configured to remove the purging gas from the storage tank that is pressurized at or above the storage pressure of the substitute cryogenic liquid.

9. The system according to claim 8, wherein an outer wall of the respective one or more storage tanks (501) is covered with insulating foam elements configured to conform to a thermal deformation of the outer wall.

10. The system according to claim 8, wherein the respective one or more storage tanks (501) are enclosed by a casing (502), and wherein an enclosed volume between an outer wall of a respective storage tank and an inner wall of the casing is filled with insulating elements (503) that are in moveable contact with each other.

11. The system according to claim 10, further comprising a vacuum pump (504) configured to generate a vacuum within the enclosed volume.

12. The system according to claim 10 or 11, wherein the insulating elements (503) are made of a light-weight material **characterized by** a low heat transfer coefficient.

13. A ship comprising the system according to any of claims 8 - 12.

14. A ship comprising the system according to claim 8, wherein the one or more storage tanks (511, 512) are enclosed within a hull (514) of the ship, and wherein the hull comprises an insulating material.

15. The ship according to claim 14, further comprising an air dehydration unit (515) configured to dehydrate the air within the hull (514).
